# EUROPEAN PATENT APPLICATION

(11) **EP 4 144 200 A1**
(43) Date of publication of application: **08.03.2023**
(21) Application number: 22191970.7
(22) Date of filing: 24.08.2022
(51) Int. Cl.: A01D 34/00, A01D 34/78, A01D 69/02, A01D 34/68, B60L 3/00

(54) **VEHICLE FOR THE MAINTENANCE OF LAND, IN PARTICULAR FOR THE CARE OF TURFGRASSES**

(30) Priority: 01.09.2021 IT 202100022727
(71) Applicant: Stiga S.p.A. in breve anche St. S.p.A., 31033 Castelfranco Veneto (TV) (IT)
(72) Inventor: PIETROBON, Christian, 36065 Mussolente (VI) (IT); MOCELLIN, Enrico, 31020 San Zenone degli Ezzelini (TV) (IT); BENETTI, Enrico, 31033 Castelfranco Veneto (TV) (IT); FRANCO, Luca, 31050 Cavasagra di Vedelago (TV) (IT)
(74) Representative: PGA S.p.A.

(57) **Abstract**

The present invention relates to a mobile vehicle, in particular for cutting lawns or gardens, comprising a support frame (3), a driving station (4), at least one work tool (5) carried below by said support frame (3) for performing a process on land to be maintained, and a command device (7), such as a joystick, operable by the operator seated in said driving station (4), for determining a movement of the vehicle. The vehicle comprises a right drive wheel and a left drive wheel as well as a first and a second electric motor (9a), independent of each other, coupled to the first and the second wheel respectively and powered by a battery pack (10); a controller (50) is configured for receiving at least one command signal from the command device (7) and consequently commanding the two electric motors. In one aspect, the controller (50) can, upon detection of emergency signals, command the locking of the electric motors active on the wheels, and of the electric motor(s) active on the work tool (5). In a further aspect, an emergency brake managed by the controller (50) is included on each of the crankshafts of each of the electric motors.

## Description

### FIELD OF THE INVENTION

The present invention relates to a land maintenance vehicle, and in particular for the care of turfgrasses of gardens or lawns or for the care/processing of agricultural land. In particular, the vehicle can be a lawnmower vehicle with at least one driving station for an operator.

### BACKGROUND ART

In the field of land maintenance, in particular gardening, the use of motor vehicles or tractors is known, provided with suitable work tools for performing operations such as lawn mowing, soil tillage, soil aeration, etc.

Currently, the propulsion of such vehicles is almost exclusively performed with internal combustion engines. The driving of the vehicles in question typically occurs by operating a steering wheel in combination with one or more pedals, or by acting on driving arms which suitably control the propulsion and steering of the vehicle.

Although widely used, the known type of vehicles have one or more of the following drawbacks:
- noise, mainly due to the type of propulsion,
- poor manoeuvrability and difficulty in accurately and comfortably controlling the trajectory of the vehicle,
- lack of operating flexibility; in particular, lawnmower vehicles of the known type do not lend themselves to operating flexibly on both large and unobstructed grass surfaces and on grass surfaces where winding manoeuvres must be easily performed; in addition, the typical lawnmower vehicles are not particularly flexible in adapting the action of the cutting blades to the various operating needs and in a manner unconstrained by the power delivered by the engine also intended for traction.

Furthermore, although provided with safety systems for stopping the engine in certain hazardous situations, the known type of vehicles have also proved to be capable of improvement from this point of view.

### OBJECT OF THE INVENTION

Therefore, the object of the present invention is to solve at least one of the drawbacks and/or limitations of the previous solutions.

A first object of the present invention is to provide a land maintenance vehicle, in particular a lawnmower, with high energy efficiency and low noise.

A further object of the invention is to provide a land maintenance vehicle, in particular a lawnmower vehicle, capable of improved operating flexibility and thus capable of effectively facing both the cutting of large unobstructed areas and, for example, gardens with trees or with flower beds or other obstacles.

An additional object of the invention is to provide a land maintenance vehicle, in particular a lawnmower vehicle, which is improved in terms of safety.

It is also an object of the invention to provide a land maintenance vehicle, in particular a lawnmower vehicle, which is of high and intuitive manoeuvrability.

Another object of the invention is to provide a land maintenance vehicle, in particular a lawnmower vehicle, in which the control of the cutting blades has been improved.

Lastly, it is an object of the invention to provide an equipped vehicle in which the energization of the moving parts and the control thereof is obtained with a simple and reliable architecture.

These and other objects, which will appear more clearly from the following description, are substantially achieved by a vehicle in accordance with one or more of the appended claims and/or the following aspects.

### SUMMARY

Aspects of the invention are described here below.

In a 1st aspect, a land maintenance vehicle is included, in particular for cutting lawns or gardens, comprising:
- a support frame (3),
- a driving station (4) for an operator carried by the support frame (3),
- at least one work tool (5) carried below by said support frame (3) and configured for performing a process on lands to be maintained,
- at least one command device (7), operable by the operator in said driving station (4), to determine a movement of the vehicle,
- at least one right traction member (8) and one left traction member (9) carried by the support frame (3) and intended for the transmission of traction to the ground,
- at least a first and a second electric motor (8a, 9a), independent of each other, the first electric motor (8a) being coupled to the right traction member (8) and the second electric motor (9a) being coupled to the left traction member (9),
- at least one battery pack (10) for the electric power supply of said first and second electric motor (9a),
- at least one controller (50) communicatively connected with said at least one command device (7), with the first electric motor (8a), with the second electric motor (9a) and, optionally, with the battery pack (10), said controller (50) being configured for:
   ∘ receiving at least one command signal from the command device (7),
   ∘ on the basis of such an at least one command signal, generating a first control signal for driving the first electric motor (8a) and a second control signal for driving the second electric motor (9a).

In a 2nd aspect according to the preceding aspect, the command device (7) comprises a manual drive member (11) configured for being movable from a neutral position to a plurality of distinct operating positions from each other and from the neutral position, and in which for each of said operating positions assumed by the manual drive member (11), the command device (7) is configured for emitting at least one respective command signal.

In a 3rd aspect according to the preceding aspect, the manual drive member (11) is configured for moving from said neutral position at least with:
- a movement along, or around, a first axis (12),
- a movement along, or around, a second transverse axis (13), optionally perpendicular, to the first axis (12), and
- a combined movement either along, or around, the first axis (12) or along, or around, the second axis (13),
said command device (7) being configured for generating said at least one command signal which is a function of:
- a component of said movement of the manual drive member (11), relative to said neutral position, along or around the first axis (12) and
- a component of said movement of the drive member itself, relative to said neutral position, along or around the second axis (13).

In a 4th aspect according to any one of the preceding two aspects, the manual drive member (11) comprises at least one lever configured for:
- assuming said neutral position in the absence of an action on said lever by the operator,
- being movable, upon operator action, away from said neutral position
   ∘ bi-directionally along or around the first axis (12) and/or
   ∘ bi-directionally along or around the second axis (13).

In a 5th aspect according to the preceding aspect, the command device (7) is a 2 or 3-axis joystick of which said lever is part.

In a 6th aspect according to any one of the preceding three aspects, the command device (7) is configured for generating:
- a first command signal which is a function of the component of said movement of the manual drive member (11), relative to said neutral position, along or around the first axis (12) and
- a second command signal which is a function of the component of said movement of the drive member itself, relative to said neutral position, along or around the second axis (13).

In a 7th aspect according to any one of the preceding aspects, the step of generating the first control signal by the controller (50) comprises:
- calculating, on the basis of said at least one command signal, a value of a first parameter related to the angular speed set point to apply to the first electric motor (8a), and
- calculating, on the basis of said at least one command signal, a value of a second parameter related to the speed set point to apply to the second electric motor (9a).

In an 8th aspect according to the preceding aspect, the controller (50) is configured for calculating the value of the first parameter as a function of a first mapping factor and, optionally, of an angular speed reference value.

In a 9th aspect according to the preceding aspect, the controller (50) is configured for calculating the first mapping factor, optionally consisting of a multiplicative factor expressed as a percentage of said reference angular speed, is a predetermined value for each of said operating positions assumed by the manual drive member (11).

In a 10th aspect according to the preceding aspect, the controller (50) is configured for selecting the value of the first mapping factor as a function of:
∘ said component of said movement of the manual drive member (11), relative to said neutral position, along or around the first axis (12) and
∘ said component of said movement of the drive member itself, relative to said neutral position, along or around the second axis (13).

In an 11th aspect according to any one of the preceding aspects from 7th to 10th, the controller (50) is configured for calculating the value of the second parameter as a function of a second mapping factor and, optionally, an angular speed reference value.

In a 12th aspect according to the preceding aspect, the controller (50) is configured for calculating the second mapping factor, optionally consisting of a multiplicative factor expressed as a percentage of said reference angular speed, is a predetermined value for each of said operating positions assumed by the manual drive member (11).

In a 13th aspect according to the preceding aspect, the controller (50) is configured for selecting the value of the second mapping factor as a function of:
∘ said component of said movement of the manual drive member (11), relative to said neutral position, along or around the first axis (12) and
∘ said component of said movement of the drive member itself, relative to said neutral position, along or around the second axis (13).

In a 14th aspect according to any one of the preceding aspects, the controller (50) is communicatively connected to, or comprises, a memory (51) in which at least one mapping is stored comprising:
- the values of said first mapping factor for each of said operating positions assumed by the manual drive member (11), and
- the values of said second mapping factor for each of said operating positions assumed by the manual drive member (11).

In a 15th aspect according to any one of the preceding aspects, of which the controller (50) is configured for selecting the value of the first and second factor as a function of the operating positions assumed by the manual drive member (11).

In a 16th aspect according to any one of the preceding aspects, the controller (50) is configured for selecting the value of the first and second factor as a function of:
- said component of said movement of the manual drive member (11), relative to said neutral position, along or around the first axis (12) and
- said component of said movement of the drive member itself, relative to said neutral position, along or around the second axis (13).

In a 17th aspect according to any one of the three preceding aspects, a plurality of mappings distinct from each other are stored in the memory (51), each mapping comprising:
- respective values of said first mapping factor for each of said operating positions assumed by the manual drive member (11), and
- respective values of said second mapping factor for each of said operating positions assumed by the manual drive member (11).

In an 18th aspect according to any one of the preceding aspects, the controller (50) is configured for receiving a selection of one of the mappings by the operator and for selecting the value of the first and second factor also as a function of said selection of one of the mappings.

In a 19th aspect according to any one of the preceding aspects, the controller (50) is configured for calculating the value of the first and the second parameter as a function of the selection value, the first or second mapping factor and, optionally, the reference angular speed value, in which said selection value represents a multiplicative parameter of the first and the second mapping factor.

In a 20th aspect according to any one of the preceding aspects, the first control signal generated by the controller (50) comprises the value of said first parameter.

In a 21st aspect according to any one of the preceding aspects, the second control signal generated by the controller (50) comprises the value of said second parameter.

In a 22nd aspect according to any one of the preceding aspects, the controller (50) comprises:
- a main controller (50a) communicatively connected to the command device (7),
- a first peripheral controller (52) communicatively connected with the main controller and with the first electric motor (8a), and
- a second peripheral controller (53) communicatively connected with the main controller and with the second electric motor (9a).

In a 23rd aspect according to the preceding aspect, the main controller is configured for:
- receiving said at least one command signal from the command device (7),
- sending the first control signal to the first peripheral controller (52), the latter being configured for driving the first electric motor (8a) on the basis of said first control signal, and
- sending the second control signal to the second peripheral controller (53), the latter being configured for driving the second electric motor (9a) on the basis of said second control signal.

In a 24th aspect according to any one of the preceding aspects, the value of the first parameter is recalculated by the controller (50) at regular intervals or upon detection by the controller (50) of a variation in the command signal.

In a 25th aspect according to any one of the preceding aspects, the value of the second parameter is recalculated by the controller (50) at regular intervals or upon detection by the controller (50) of a variation in the command signal.

In a 26th aspect according to any of the preceding aspects, the work tool (5) comprises at least one rotary blade (14). In a 27th aspect according to one of the preceding aspects, the vehicle includes at least one auxiliary electric motor (15), independent from said first and second electric motor (9a), connected with the rotary blade (14) and configured for rotating the latter.

In a 28th aspect according to the preceding aspect, the controller (50) is communicatively connected with the auxiliary electric motor (15) and configured for emitting a drive signal of the auxiliary electric motor (15) and the rotational movement of the rotary blade (14).

In a 29th aspect according to any one of the three preceding aspects, the work tool (5) comprises a plurality, optionally two, rotary blades.

In a 30th aspect according to the preceding aspect, the vehicle includes at least one respective auxiliary electric motor (15), independent from said first and second electric motor (8a, 9a), connected to each of said respective rotary blades (14) and configured for rotating the latter.

In a 31st aspect according to the preceding aspect, the controller (50) is communicatively connected with each auxiliary electric motor (15) and configured for emitting, for each auxiliary electric motor (15), a respective drive and rotating movement signal of the respective rotary blade (14).

In a 32nd aspect according to any one of the preceding aspects from 28th to 31st, the controller (50) is configured for setting, through said drive signal, a rotation speed of the/each auxiliary electric motor (15).

In a 33rd aspect according to any one of the preceding aspects from 28th to 32nd, the controller (50) is configured for determining such a rotation speed of each auxiliary electric motor (15) on the basis of at least one of the following:
- an angular speed setting signal received in input from said controller (50), which can optionally be entered by the operator through an input unit (16) communicatively connected with the controller (50),
- a selection signal of one of a plurality of possible preset angular speed values present in one/said memory (51) communicatively connected to the controller (50), which can optionally be entered by the operator through one/said input unit (16) communicatively connected with the controller (50),
- an electrical current absorption detection by said auxiliary motor,
- a resistant torque detection active on the crankshaft of said auxiliary motor,
- a detection signal from a grass sensor (17) configured for detecting a height and/or density parameter of the grass to be cut communicatively connected with said controller (50), said grass sensor comprising an optical sensor and/or an acoustic sensor and/or a tactile sensor.

In a 34th aspect according to any one of the preceding aspects, the controller (50) comprises, for each auxiliary electric motor (15), an auxiliary peripheral controller (54) communicatively connected with the main controller (50a) and with the auxiliary electric motor (15).

In a 35th aspect according to the preceding aspect, the main controller (50a) is configured for sending a respective drive signal to each auxiliary peripheral controller (54), the latter being configured for driving the respective auxiliary electric motor (15) on the basis of the drive signal.

In a 36th aspect according to any one of the preceding aspects, the controller (50) is configured for
- receiving one or more safety signals, and
- moving from a normal operating condition to an emergency condition upon receipt of said one or more safety signals or upon detection of a variation in said one or more safety signals.

In a 37th aspect according to any one of the preceding aspects, the vehicle comprises one or more of the following safety sensors:
- at least one presence sensor (18) configured for detecting whether the operator is in said driving station (4) and generating or varying a respective safety signal if the presence of the operator is not detected, optionally wherein said presence sensor (18) comprises a weight sensor associated with the driving station (4) configured for generating or varying the respective safety signal if the detected weight is less than a predetermined threshold,
- at least one charge sensor (19) of the battery pack (10) configured for detecting whether or not a power cable is connected with a charging port (20) of said battery pack (10) carried by the vehicle and generating or varying a respective safety signal if the connection of the power cable to the charging port (20) is not detected,
- at least one ignition key sensor (21) configured for detecting at least the presence of a vehicle ignition key in a seat for said key carried by the vehicle itself and for generating or varying a respective safety signal if the presence of the key in said seat is not detected,
- at least one emergency sensor (22) configured for detecting whether an emergency command has been activated and generating or varying a respective safety signal if the activation of the emergency command is detected, optionally wherein the emergency sensor (22) comprises an activation sensor of an emergency selector or switch carried by said vehicle;
each of said safety sensors being communicatively connected with the controller (50) and arranged to transmit the respective safety signal to the latter.

In a 38th aspect according to any one of the two preceding aspects, the controller (50), when in said emergency condition, is configured for performing a stop procedure comprising the following steps:
- generating a stop signal for determining the stoppage of the first electric motor (8a).
- generating a stop signal for determining the stoppage of the second electric motor (9a).

In a 39th aspect according to any one of the preceding three aspects, the vehicle comprises a first emergency brake (8b) operatively interposed between the first electric motor (8a) and the right traction member (8).

In a 40th aspect according to any one of the four preceding aspects, the vehicle comprises a second emergency brake (9b) operatively interposed between the second electric motor (9a) and the left traction member (9).

In a 41st aspect according to the preceding aspect, the controller (50), when in said emergency condition, is configured for performing an emergency stop procedure comprising:
- determining the intervention of said first emergency brake (8b) for controlling the locking of the right traction member (8) and
- determining the intervention of said second emergency brake (9b) for controlling the locking of the left traction member (9).

In a 42nd aspect according to the preceding aspect, the controller (50), when in said emergency condition, is configured for sequentially performing the following actions:
- performing the stop procedure,
- verifying whether, within a predetermined time interval following the stop procedure, the first and the second electric motor (9a) have actually stopped and/or the movement of said first and said second traction member has actually stopped,
- if the verification procedure has a negative outcome, performing the emergency stop procedure.

In a 43rd aspect according to any one of the preceding four aspects, the first emergency brake (8b) comprises at least one respective locking element (24) selectively movable between a first position in which it allows the movement of the right traction member (8) and a second position in which it locks the movement of the right traction member (8).

In a 44th aspect according to any one of the preceding five aspects, the second emergency brake (9b) comprises at least one respective locking element (24) selectively movable between a first position in which it allows the movement of the left traction member (9) and a second position in which it locks the movement of the left traction member (9).

In a 45th aspect according to any of the preceding aspects from the 39th to 44th, each of said first and second emergency brake (8b, 9b) comprises at least one respective electromagnetic component (23) powered by a respective electrical line connected with said battery pack (10) and configured, only when electrically powered, for generating an electromagnetic field.

In a 46th aspect according to the preceding aspect, the respective locking element (24) is configured for cooperating with the electromagnetic component (23) and coupling with said electromagnetic field which can be generated by the electromagnetic component, so as to undergo a primary thrust in the presence of the electromagnetic field itself.

In a 47th aspect according to the preceding aspect, when the controller (50) is in said normal operating condition, the battery pack (10) is configured for electrically powering the electromagnetic component (23) through said electrical line and, thus, determining the generation of said electromagnetic field and said primary thrust on the respective locking element (24) configured for maintaining the locking element (24) itself in said first position.

In a 48th aspect according to any one of the two preceding aspects, when the controller (50) is in the emergency condition, in particular during the execution of said emergency stop procedure, the controller (50) is configured for opening said electrical line and disabling the electric power supply from the battery pack (10) to the electromagnetic component, said respective locking element (24) in the absence of said primary thrust being configured for moving to said second position.

In a 49th aspect according to any one of the preceding aspects from the 39th to 48th, each of said first and second emergency brake (8b, 9b) comprises a respective elastic component (25) active on the locking element (24) of the corresponding of said first and second brake and configured for exerting a secondary thrust on said locking element (24) towards the second position.

In a 50th aspect according to the preceding aspect, in the presence of power supply in said power supply line, the primary thrust exerted by the electromagnetic field on the locking element (24) towards said first position, is configured for prevailing over the secondary thrust, consequently maintaining the locking element (24) itself in said first position. In a 51st aspect according to any one of the two preceding aspects, in the absence of power supply from the battery pack (10) to the electromagnetic component (23), the locking element (24) is configured for moving in said second position upon the action of the secondary thrust.

In a 52nd aspect according to any one of the preceding aspects, the right traction member (8) comprises a right drive wheel keyed on a respective shaft (26) connected to the first electric motor (8a) and in which the left traction member (9) comprises a left drive wheel keyed on a respective shaft (27) connected to the second electric motor (9a).

In a 53rd aspect according to any one of the preceding aspects, the vehicle comprises one or more non-motorized auxiliary wheels (35) mounted to the frame, in particular hinged to the frame according to a free vertical rotation axis. In a 54th aspect according to any one of the preceding aspects from the 39th to 53rd, the first emergency brake (8b) is active on said shaft (26) between the first electric motor (8a) and the right drive wheel.

In a 55th aspect according to any one of the preceding aspects from the 40th to 54th the second emergency brake (9b) is active on the shaft (27) between the second electric motor (9a) and the left traction member (9).

In a 56th aspect according to any one of the preceding aspects, the controller (50), when in said emergency condition, is configured for performing one/said stop procedure comprising the following step/the further step of generating a stop signal for determining the stoppage of each auxiliary electric motor (15).

In a 57th aspect according to any one of the preceding aspects, the vehicle comprises an auxiliary emergency brake (28) operatively interposed between each auxiliary electric motor (15) and the respective blade.

In a 58th aspect according to the preceding aspect, the controller (50), when in said emergency condition, is configured for performing one/said emergency stop procedure comprising the following step/the further step of determining the intervention of each said auxiliary emergency brake (28) to control the locking of each blade.

In a 59th aspect according to any one of the preceding three aspects, the controller (50), when in said emergency condition, is configured for sequentially performing the following actions:
- performing the stop procedure,
- verifying whether, within a predetermined time interval following the stop procedure, each auxiliary electric motor (15) has actually stopped and/or the movement of each blade has actually stopped,
- if the verification procedure has a negative outcome, performing the emergency stop procedure.

In a 60th aspect according to any one of the preceding aspects, each auxiliary emergency brake (28) comprises at least one respective locking element (24) selectively movable between a first position in which it allows the transmission of motion from the respective auxiliary electric motor (15) to the corresponding blade (14) and a second position in which it locks the transmission of motion from the respective auxiliary electric motor (15) to the corresponding blade (14).

In a 61st aspect according to any one of the preceding aspects, each auxiliary brake comprises at least one respective electromagnetic component (23) powered by a respective electrical line (29) connected with said battery pack (10) and configured, only when electrically powered, for generating an electromagnetic field.

In a 62nd aspect according to the preceding aspect, the respective locking element is configured for cooperating with the electromagnetic component (23) and coupling with said electromagnetic field which can be generated by the electromagnetic component, so as to undergo a primary thrust in the presence of the electromagnetic field itself.

In a 63rd aspect according to the preceding aspect, when the controller (50) is in said normal operating condition, the battery pack (10) is configured for electrically powering the electromagnetic component (23) through said electrical line and, thus, determining the generation of said electromagnetic field and said primary thrust on the respective locking element (24) configured for maintaining the locking element (24) itself in said first position.

In a 64th aspect according to any one of the two preceding aspects, the controller (50) is in the emergency condition, in particular during the execution of said emergency stop procedure, the controller (50) is configured for opening said electrical line and disabling the electric power supply from the battery pack (10) to the electromagnetic component, said respective locking element (24) in the absence of said primary thrust being configured for moving to said second position.

In a 65th aspect according to any one of the preceding aspects, each auxiliary emergency brake (28) comprises a respective elastic component (25) active on the locking element (24) of the auxiliary brake itself and configured for exerting a secondary thrust on said locking element (24) towards the second position.

In a 66th aspect according to the preceding aspect, in the presence of power supply in said power supply line, the primary thrust exerted by the electromagnetic field on the locking element (24) towards said first position, is configured for prevailing over the secondary thrust, consequently maintaining the locking element (24) itself in said first position. In a 67th aspect according to any one of the two preceding aspects, in the absence of power supply from the battery pack (10) to the electromagnetic component (23), the locking element (24) is configured for moving in said second position upon the action of the secondary thrust.

In a 68th aspect according to any one of the preceding aspects, each blade (14) is keyed on a respective shaft (30) connected to the respective auxiliary electric motor (15), and in which the corresponding emergency auxiliary brake (28) is active on said respective shaft (30).

In a 69th aspect, a land maintenance vehicle is included, in particular for cutting lawns or gardens, comprising:
- a support frame (3),
- a driving station (4) for an operator carried by the support frame (3),
- at least one work tool (5) carried below by said support frame (3) and configured for performing a process on lands to be maintained,
- at least one command device (7), operable by the operator in said driving station (4), to determine a movement of the vehicle (1),
- at least one right traction member (8) and one left traction member (9) carried by the support frame (3) and intended for the transmission of traction to the ground,
- at least a first and a second electric motor (9a), independent of each other, the first electric motor (8a) being coupled to the right traction member (8) and the second electric motor (9a) being coupled to the left traction member (9),
- at least one battery pack (10) for the electric power supply of said first and second electric motor (9a),
- at least one of:
   ∘ a first emergency brake (8b) operatively interposed between the first electric motor (8a) and the right traction member (8),
   ∘ a second emergency brake (9b) operatively interposed between the second electric motor (9a) and the left traction member (9),
   ∘ at least one auxiliary emergency brake (28) active on the work tool (5),
- at least one controller (50) communicatively connected with
   ∘ the command device (7),
   ∘ the first electric motor (8a),
   ∘ the second electric motor (9a),
   ∘ at least one of the first emergency brake, the second emergency brake (9b) and the auxiliary emergency brake (28),
   wherein the controller (50) is configured for:
   ∘ operating in a normal operating condition wherein it commands said first and second and electric motor (8a, 8b) in motion,
   ∘ receiving one or more safety signals,
   ∘ moving from the normal operating condition to an emergency condition upon receipt of said one or more safety signals or upon detection of a variation in said one or more safety signals, and
   ∘ when in said emergency condition, performing an emergency stop procedure comprising:
      ▪ determining the intervention of at least one of the first emergency brake, the second emergency brake (9b) and the auxiliary emergency brake (28).

In a 70th aspect according to the preceding aspect, the vehicle comprises:
- a first emergency brake (8b) operatively interposed between the first electric motor (8a) and the right traction member (8),
- a second emergency brake (9b) operatively interposed between the second electric motor (9a) and the left traction member (9),
- an auxiliary emergency brake (28) active on the work tool (5).

In a 71st aspect according to the preceding aspect, the emergency stop procedure comprises determining the intervention of:
- said first brake to control the locking of the right traction member (8),
- said second brake to control the locking of the left traction member (9), and
- said auxiliary emergency brake (28).

In a 72nd aspect according to any one of the three preceding aspects, the controller (50), when in said emergency condition, is configured for performing a stop procedure comprising the following steps:
- generating a stop signal for determining the stoppage of the first electric motor (8a).
- generating a stop signal for determining the stoppage of the second electric motor (9a).

In a 73rd aspect according to the preceding aspect, the controller (50), when in said emergency condition, is configured for sequentially performing the following actions:
- performing the stop procedure,
- verifying whether, within a predetermined time interval following the stop procedure, the first and the second electric motor (9a) have actually stopped and/or the movement of said first and said second traction member (8, 9) has actually stopped,
- if the verification procedure has a negative outcome, performing the emergency stop procedure.

In a 74th aspect according to any one of the preceding aspects from the 69th to 73rd, the controller (50) in said normal operating condition is configured for:
- receiving at least one command signal from the command device (7),
- on the basis of such an at least one command signal, generating a first control signal for driving the first electric motor (8a) and a second control signal for driving the second electric motor (9a).

In a 75th aspect according to any one of the preceding aspects from 69th to 74th, the vehicle comprises one or more of the following safety sensors:
- at least one presence sensor (18) configured for detecting whether the operator is in said driving station (4) and generating or varying a respective safety signal if the presence of the operator is not detected, optionally wherein said presence sensor (18) comprises a weight sensor associated with the driving station (4) configured for generating or varying the respective safety signal if the detected weight is less than a predetermined threshold,
- at least one charge sensor of the battery pack (10) configured for detecting whether or not a power cable is connected with a charging port (20) of said battery pack (10) carried by the vehicle and generating or varying a respective safety signal if the connection of the power cable to the charging port (20) is not detected,
- at least one ignition key sensor (21) configured for detecting at least the presence of a vehicle ignition key in a seat for said key carried by the vehicle itself and for generating or varying a respective safety signal if the presence of the key in said seat is not detected,
- at least one emergency sensor (22) configured for detecting whether an emergency command has been activated and generating or varying a respective safety signal if the activation of the emergency command is detected, optionally wherein the emergency sensor (22) comprises an activation sensor of an emergency selector or switch carried by said vehicle;
each of said safety sensors being communicatively connected with the controller (50) and arranged to transmit the respective safety signal to the latter.

In a 76th aspect according to any one of the preceding aspects from the 69th to 75th, the first emergency brake (8b) comprises at least one respective locking element (24) selectively movable between a first position in which it allows the movement of the right traction member (8) and a second position in which it locks the movement of the right traction member (8).

In a 77th aspect according to any one of the preceding aspects from the 69th to 76th, the second emergency brake (9b) comprises at least one respective locking element (24) selectively movable between a first position in which it allows the movement of the left traction member (9) and a second position in which it locks the movement of the left traction member (9).

In a 78th aspect according to any one of the two preceding aspects, each of said first and second brake comprises at least one respective electromagnetic component (23) powered by a respective electrical line (29) connected with said battery pack (10) and configured, only when electrically powered, for generating an electromagnetic field.

In a 79th aspect according to the preceding aspect, the respective locking element (24) is configured for cooperating with the electromagnetic component (23) and coupling with said electromagnetic field which can be generated by the electromagnetic component, so as to undergo a primary thrust in the presence of the electromagnetic field itself.

In an 80th aspect according to the preceding aspect, when the controller (50) is in said normal operating condition, the battery pack (10) is configured for electrically powering the electromagnetic component (23) through said electrical line and, thus, determining the generation of said electromagnetic field and said primary thrust on the respective locking element (24) configured for maintaining the locking element (24) itself in said first position.

In an 81st aspect according to any one of the two preceding aspects, when the controller (50) is in the emergency condition, in particular during the execution of said emergency stop procedure, the controller (50) is configured for opening said electrical line (29) and disabling the electric power supply from the battery pack (10) to the electromagnetic component, said respective locking element (24) in the absence of said primary thrust being configured for moving to said second position.

In an 82nd aspect according to any one of the four preceding aspects, each of said first and second brake comprises a respective elastic component (25) active on the locking element (24) of the corresponding of said first and second emergency brake (8b, 9b) and configured for exerting a secondary thrust on said locking element (24) towards the second position.

In an 83rd aspect according to the preceding aspect, in the presence of power supply in said power supply line, the primary thrust exerted by the electromagnetic field on the locking element (24) towards said first position, is configured for prevailing over the secondary thrust, consequently maintaining the locking element (24) itself in said first position. In an 84th aspect according to any one of the two preceding aspects, in the absence of power supply from the battery pack (10) to the electromagnetic component (23), the locking element (24) is configured for moving in said second position upon the action of the secondary thrust.

In an 85th aspect according to any one of the preceding aspects from the 69th to 84th, the right traction member (8) comprises a right drive wheel keyed on a respective shaft (26) connected to the first electric motor (8a) and in which the left traction member (9) comprises a left drive wheel keyed on a respective shaft (27) connected to the second electric motor (9a).

In an 86th aspect according to the preceding aspect, the vehicle comprises one or more non-motorized auxiliary wheels (31) mounted to the frame (3), in particular hinged to the frame (3) according to a free vertical rotation axis.

In an 87th aspect according to any one of the two preceding aspects, the first emergency brake (8b) is active on said shaft (26) between the first electric motor (8a) and the right drive wheel, and in which the second emergency brake (9b) is active on the shaft (27) between the second electric motor (9a) and the left traction member (9).

In an 88th aspect according to any one of the preceding aspects from the 69th to 87th, the work tool (5) comprises at least one rotary blade (14), in which the vehicle includes at least one auxiliary electric motor (15), independent from said first and second electric motor (9a), connected with the rotary blade (14) and configured for rotating the latter.

In an 89th aspect according to the preceding aspect, the controller (50) is communicatively connected with the auxiliary electric motor (15) and configured for emitting a drive signal of the auxiliary electric motor (15) and the rotational movement of the rotary blade (14).

In a 90th aspect according to any one of the preceding two aspects, the work tool (5) comprises a plurality, optionally two, rotary blades (14), in which the vehicle (1) includes at least one respective auxiliary electric motor (15), independent from said first and second electric motor (9a), connected to each of said respective rotary blades (14) and configured for rotating the latter.

In a 91st aspect according to the preceding aspect, the controller (50) is communicatively connected with each auxiliary electric motor (15) and configured for emitting, for each auxiliary electric motor (15), a respective drive and rotating movement signal of the respective rotary blade (14).

In a 92nd aspect according to any one of the preceding aspects from 69th to 91st, the stop procedure comprises the further step of:
- generating a stop signal for determining the stoppage of each auxiliary electric motor (15).

In a 93rd aspect according to any one of the preceding aspects from 69th to 92nd, the auxiliary emergency brake (28) is operatively interposed between each auxiliary electric motor (15) and the respective blade (14).

In a 94th aspect according to any one of the preceding aspects from the 69th to 93rd, the emergency stop procedure comprises the further step of determining the intervention of each said auxiliary emergency brake (28) to control the locking of each respective blade (14).

In a 95th aspect according to any one of the preceding two aspects, the controller (50), when in said emergency condition, is configured for sequentially performing the following actions:
- performing the stop procedure,
- verifying whether, within a predetermined time interval following the stop procedure, each auxiliary electric motor (15) has actually stopped and/or the movement of each blade (14) has actually stopped,
- if the verification procedure has a negative outcome, performing the emergency stop procedure.

In a 96th aspect according to any one of the preceding three aspects, each auxiliary emergency brake (28) comprises at least one respective locking element (24) selectively movable between a first position in which it allows the transmission of motion from the respective auxiliary electric motor (15) to the corresponding blade and a second position in which it locks the transmission of motion from the respective auxiliary electric motor (15) to the corresponding blade.

In a 97th aspect according to any one of the preceding aspects from the 69th to 96th, each auxiliary emergency brake (28) comprises:
- at least one respective electromagnetic component (23) powered by a respective electrical line connected with said battery pack (10) and configured, only when electrically powered, for generating an electromagnetic field.

In a 98th aspect according to the preceding aspect, the respective locking element (24) is configured for cooperating with the electromagnetic component (23) and coupling with said electromagnetic field which can be generated by the electromagnetic component, so as to undergo a primary thrust in the presence of the electromagnetic field itself.

In a 99th aspect according to the preceding aspect, when the controller (50) is in said normal operating condition, the battery pack (10) is configured for electrically powering the electromagnetic component (23) through said electrical line (29), for determining the generation of said electromagnetic field and said primary thrust on the respective locking element (24) configured for maintaining the locking element (24) itself in said first position.

In a 100th aspect according to any one of the two preceding aspects, when the controller (50) is in the emergency condition, in particular during the execution of said emergency stop procedure, the controller (50) is configured for opening said electrical line and disabling the electric power supply from the battery pack (10) to the electromagnetic component, said respective locking element (24) in the absence of said primary thrust being configured for moving to said second position.

In a 101st aspect according to any of the preceding four aspects, each auxiliary emergency brake (28) comprises:
- a respective elastic component (25) active on the locking element (24) of the auxiliary brake itself and configured for exerting a secondary thrust on said locking element (24) towards the second position.

In a 102nd aspect according to the preceding aspect, in the presence of power supply in said power supply line, the primary thrust exerted by the electromagnetic field on the locking element (24) towards said first position, is configured for prevailing over the secondary thrust, consequently maintaining the locking element (24) itself in said first position. In a 103rd aspect according to any one of the two preceding aspects, in the absence of power supply from the battery pack (10) to the electromagnetic component (23), the locking element (24) is configured for moving in said second position upon the action of the secondary thrust.

In a 104th aspect according to any one of the preceding aspects from the 69th to 103rd, each blade is keyed on a respective shaft connected to the respective auxiliary electric motor (15), and in which the corresponding auxiliary emergency brake is active on said respective connecting shaft.

### BRIEF DESCRIPTION OF THE DRAWINGS

Some embodiments and aspects of the invention will be described hereinafter with reference to the accompanying drawings, given merely for illustrative, non-limiting purposes in which:
- figures 1-2 are perspective views from above according to different views of the vehicle in accordance with the present invention;
- figure 3 is a perspective view from below of the vehicle in accordance with the present invention;
- figure 4 is a block diagram representative of the vehicle architecture shown in the preceding figures,
- figure 5 schematically shows the architecture of each emergency brake, for example active on a wheel of the vehicle and on each blade or other tool, in accordance with the present invention;
- figures 6A and 6B show a control member of the vehicle in accordance with the present invention in a neutral position and an operating position, respectively;
- figures 7A and 7B show a first and a second mapping factor, respectively, of the vehicle in accordance with the present invention.

### DEFINITIONS AND CONVENTIONS

It should be noted that in the present detailed description, corresponding parts illustrated in the various figures are indicated with the same numerical references.

The figures could illustrate the object of the invention through non--scale depictions; therefore, the parts and components illustrated in the figures related to the object of the invention could exclusively relate to schematic depictions.

The land maintenance vehicle described and claimed below can comprise/use at least one controller 50 responsible for controlling operating conditions implemented by the same vehicle. The controller 50 can be a single unit or be formed by a plurality of different controllers depending on the design choices and operating needs.

Controller is understood as an electronic type component which can comprise at least one of: a digital processor (CPU), an analogue type circuit, or a combination of one or more digital processors with one or more analogue type circuits. The controller can be "configured" or "programmed" to perform certain steps: in practice, this can be accomplished by any means which allows to configure or program the controller. For example, in the case of a controller comprising one or more CPUs and one or more memories, one or more programs can be stored in appropriate memory banks connected to the CPU(s); the program(s) contains instructions which, when performed by the CPU(s), program or configure the controller to perform the operations described in relation to the controller. Alternatively, if the controller is or comprises analogue circuitry, then the circuitry of the controller can be designed to include circuitry configured, in use, to process electrical signals so as to perform the steps related to the controller.

Parts of the process described herein can be carried out by a data processing unit, or controller, technically replaceable with one or more electronic computers designed to perform a portion of software program or firmware loaded on a memory medium. Such a software program can be written in any programming language of known type. Electronic computers, if in number equal to two or more, can be connected to each other by means of a data connection such that their computing powers are in any way shared; the same electronic computers can therefore even be installed in geographically different locations, creating a distributed computing environment through the aforementioned data connection.

The data processing unit, or controller, can be a general purpose processor configured for performing one or more parts of the process identified in the present disclosure through the software or firmware program, or be a dedicated ASIC or processor or an FPGA, specifically programmed to perform at least part of the operations of the process described herein. The memory medium can be non-transitory and can be internal or external to the processor, or controller, or data processing unit, and can - specifically - be a memory geographically located remotely with respect to the electronic computer. The memory medium can also be physically divided into multiple portions, or in cloud form, and the software or firmware can be physically provided with portions stored on geographically divided portions of memory.

### DETAILED DESCRIPTION

The numerical reference 1 overall refers to a land maintenance vehicle, for example configured for cutting the turfgrasses of a lawn, a garden or an agricultural land.

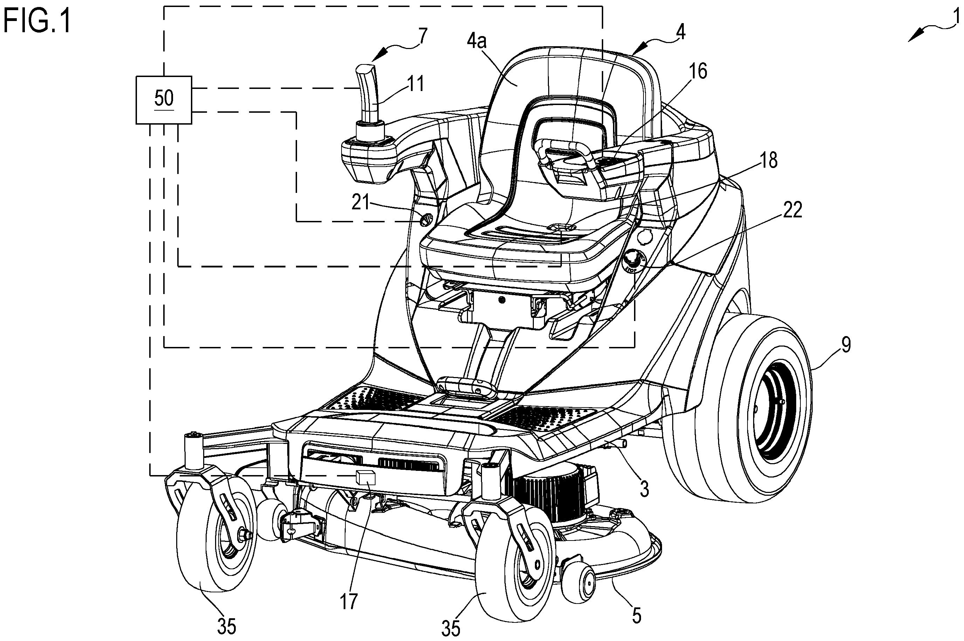

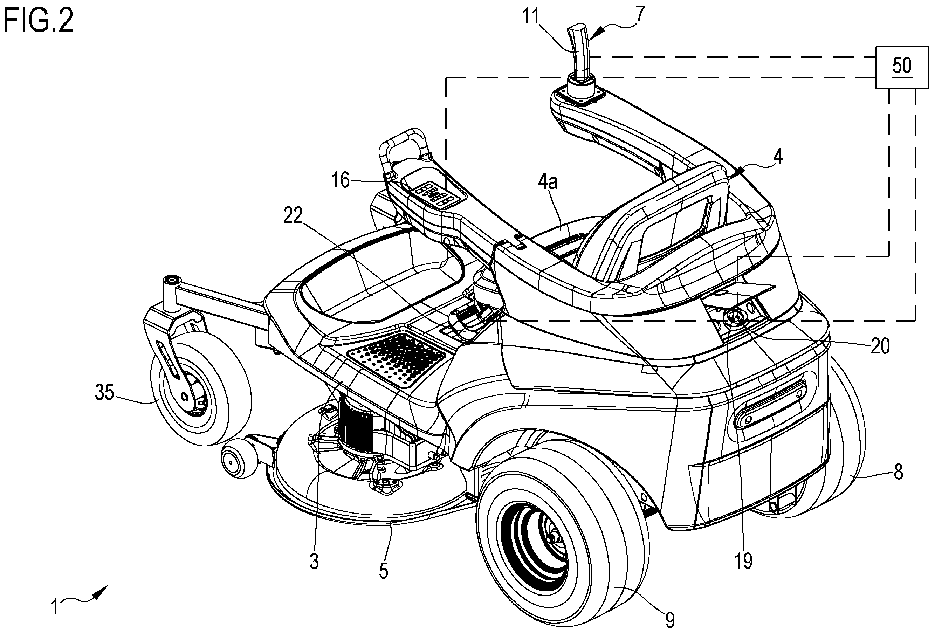

The vehicle depicted in figures 1 to 3 can be a device manually driven by a user comprising traction members, for example one or more wheels or tracks, adapted to determine the advancement of the vehicle. In particular, the vehicle comprises a right traction member 8 and a left traction member 9, in this case depicted consisting of a right drive wheel and a left drive wheel, intended for the transmission of traction to the ground. In other words, the right traction member 8 and the left traction member 9 are for example motorized wheels, adapted to determine the movement of the vehicle on the ground to be maintained. The vehicle comprises a first and a second electric motor 8a, 9a respectively connected to the right traction member 8 and to the left traction member 9: the first and second electric motor 8a, 9a are configured for determine the forward, reverse or arcuate movement of the vehicle by rotating the right traction member 8 and the left traction member 9, respectively. In particular, the first electric motor 8a comprises a shaft 26 on which the right traction member 8 is keyed, while the second electric motor 8b comprises a respective shaft 27 on which the left traction member 9 is keyed. The rotation of the shafts 26 and 27, respectively of the first and second motors 8a, 9a, determines the rotation of the right traction member 8 and the left traction member 9 and thus the movement of the vehicle.

It should be noted that the right traction member 8 is mechanically connected exclusively to the first electric motor 8a, while the left traction member 9 is mechanically connected only to the second electric motor 9a: the traction members are thus moved independently of each other by means of a dedicated motor. The possibility of arranging a single electric motor mechanically connected, and for example by means of a differential transmission member, to both the right traction member 8 and to the left traction member 9 is not excluded, so as to rotate both traction elements independently and simultaneously.

The vehicle can further comprise one or more non-motorized auxiliary wheels 35, configured for allowing the stable movement of the vehicle on three, four or more wheels. In particular, the vehicle comprises a right auxiliary wheel and a left auxiliary wheel freely movable by rotation around a vertical axis transverse to the ground: the auxiliary wheels 35 are therefore not wheels controlled by a steering, but freely steering wheels.

The vehicle 1 further comprises a support frame 3 extending in length between a front portion at which the auxiliary wheels 35 operate and a rear portion, opposite the front portion with respect to an axis X, at which the right traction member 8 and the left traction member 9 operate. As shown in figures 1-3, the right traction member 8 and the left traction member 9 are defined at a rear axle of the vehicle, while the auxiliary wheels 35 are defined at a front axle opposite the rear axle of the vehicle.

In the accompanying figures, a vehicle comprising exclusively two motorized traction members independently of each other (right traction member and left traction member) has been shown, however, an embodiment of the invention in which the traction members and the auxiliary wheels are all motorized is not excluded.

The vehicle further comprises a battery pack 10 carried by the support frame 3 and electrically connected to the first and to the second electric motor 8a, 9a. It should be noted that the battery pack 10 is not exclusively configured for powering the first and the second electric motor 8a, 9a, but more generally configured for powering each on-board electrical/electronic component. The battery pack 10 of the vehicle can be a rechargeable battery having a charging capacity between 2.5Wh and 40Wh. The battery pack 10 can be configured for delivering a voltage preferably between 26V and 48V. In greater detail, the battery pack 10 can be configured for delivering a current between 5A and 60A. The battery pack 10 can be a rechargeable battery via a power outlet of a home network, for example a 110V, 220V or 380V power source. In fact, the battery pack 10 can comprise a charging port 20 configured for coupling with a power cable connected to the home network, or to a suitable charging device, for storing electrical energy useful for powering the on-board devices.

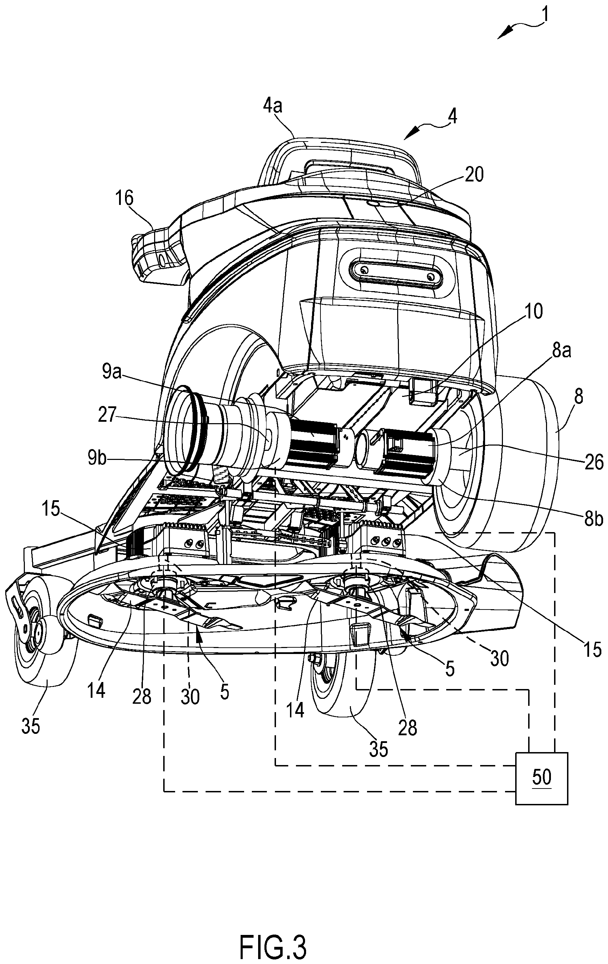

As for example shown in figure 3, the vehicle 1 further comprises a work tool 5 carried below by the support frame 3 and configured for performing a process on the land to be maintained. In particular, the work tool 5 can comprise at least one rotary blade 14 adapted to contact the ground, for example to perform a grass cutting operation. The vehicle can further comprise at least one auxiliary electric motor 15, carried by the support frame 3 and configured for rotating the rotary blade 14. The work tool 5 can comprise a plurality of rotary blades 14, in particular two rotary blades 14. The rotary blades 14 are spaced apart and, for example, rotating according to parallel axes: in particular, the blades can lie adjacent to each other and operate on parallel cutting planes: each of the blades therefore rotates around a respective axis transverse to the land. The blades can have the same diameter, or, alternatively, they can have different diameters from each other. It should further be noted that the rotary blades 14 are preferably equally rotating, so as to direct the cut grass towards the same discharge conduit 39: the term equally rotating indicates a same rotation direction of both blades, for example a clockwise or counter-clockwise direction.

Each rotary blade 14 is mechanically connected to a respective auxiliary electric motor 15 of the vehicle. In fact, the vehicle 1 can include a plurality of auxiliary electric motors 15, each of which is configured for independently rotating a respective rotary blade 14. However, an embodiment of the invention in which the vehicle has a single auxiliary electric motor 15 configured for rotating each rotary blade 14, for example by using a differential transmission member interposed between the auxiliary electric motor 15 and each blade 14, is not excluded.

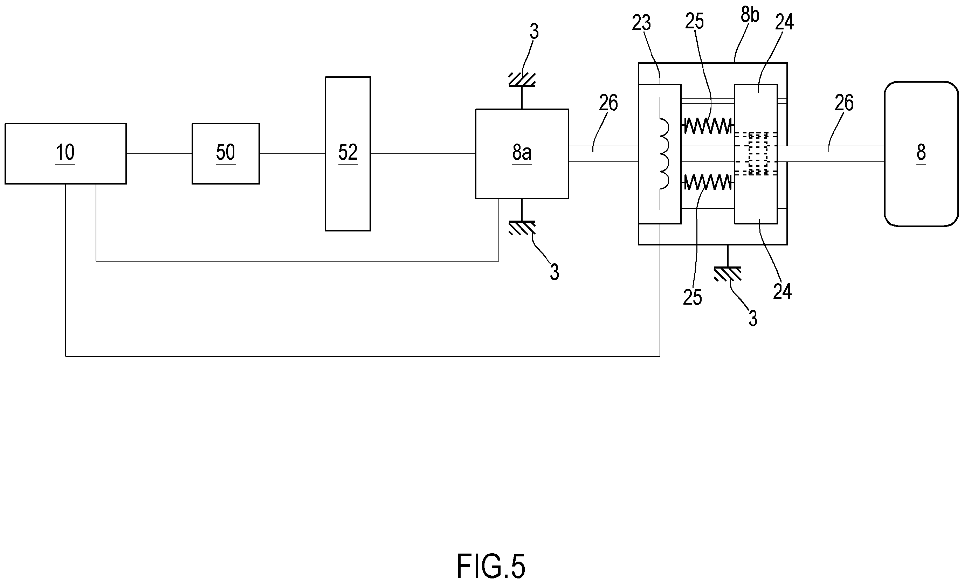

The vehicle can further comprise at least a first emergency brake 8b operatively interposed between the first electric motor 8a and the right traction member 8, as well as a second emergency brake 9b operatively interposed between the second electric motor 9a and the left traction member 9. In particular, each emergency brake has an outer casing or support integral with the frame 3, as well as at least one interference element 40 integral with the shaft 26 or shaft 27 of the first and second electric motor 8a, 9a respectively. As schematically shown in figure 5, which depicts a diagram related to the first emergency brake 8b active on the right traction member 8, said first emergency brake comprises at least one electromagnetic component 23 powered by an electric line connected with the battery pack 10 and configured, only when electrically powered, for generating an electromagnetic field. The first emergency brake 8b further comprises a locking element 24 configured for cooperating with the electromagnetic component 23 and also configured for undergoing the action of the electromagnetic field generated by the electromagnetic component itself: in practice, the locking element 24 operates in a volume in close proximity or directly adjacent to the electromagnetic component 23; in more detail, the locking element 24 is configured for undergoing a primary thrust in the presence of the magnetic field (generated by the electromagnetic component 23). In fact, the locking element 24 is selectively movable between a first position, which is maintained by virtue of the primary thrust present when the electromagnetic field is generated by the component 23, in which the locking element 24 allows the movement of the left traction member 9, and a second position, in which the locking element 24 locks the movement of the left traction member 9. As previously mentioned, the emergency brake 8b has at least one interference element 40, for example a gear or a tooth keyed on the shaft 26 or a groove always defined on the shaft of the first motor 8a and integral in the movement with the latter, configured for interacting with the locking element 24 when the latter is in the second position, so as to lock the rotation of the shaft 26 and therefore of the wheel 8. In practice, the locking element 24 and the electromagnetic component 23 can move away from and approach each other (in practice, in the solution shown, the locking element 24 moves the axis of the crankshaft 26 between the first and the second position), but they are still mounted on a support or in a casing integral with the frame 3 which prevents the rotation thereof so that, when the locking element 24 engages the interference element 40, the rotation of the shaft 26 is locked.

The first emergency brake 8b further comprises at least one elastic component 25 active in interposition between the electromagnetic component 23 and the locking element 24, configured for exerting a secondary thrust on said locking element 24 towards the second position, i.e., the position locking the rotation of the axis 26 when there is no electric power supply from the battery pack 10 and therefore the magnetic field generated by the electromagnetic component 23 is absent.

In fact, following the power interruption of the electromagnetic component 23, the locking element 24 is normally maintained in the second position by the elastic component 25. It should be noted that in the presence of the electromagnetic field generated by the component 23, the primary thrust exerted by the electromagnetic field itself is sufficient for overcoming the secondary thrust applied by the elastic component 25, determining the positioning of the locking element 24 in the first position. As a result of the lack of power of the electromagnetic component, the locking element 24, if in the first position, is moved towards the second position by means of the secondary force of the elastic component 25. In the latter case, the secondary force of the elastic component is greater than the primary force of the electromagnetic component 23, which is zero, allowing the movement of the locking element in the second position, engaged with the interference element 40. In doing so, the locking element 24 (integral with the frame 3) engages the interference element 40 integral with the shaft 26 of the first motor 8a, blocking the rotation thereof.

It should be noted how only the first emergency brake 8b has been previously described: the second emergency brake 9b is equal to the first emergency brake 8a and has the same structural and functional features as the latter, obviously aside from the fact of acting on the crankshaft 27 and therefore braking the left traction member 9: for this reason, the second emergency brake will not be subsequently detailed and figure 5 is representative of both the first and the second brake.

The vehicle further has one or more auxiliary emergency brakes 28 active on respective shafts 30 carrying the work tools; with reference to the illustrated example, an auxiliary emergency brake is included for each of the blades: in practice, each of the auxiliary brakes 28 is operatively interposed between an auxiliary electric motor 15 and the work tool or blade 5; each of the brakes 28 (similar to what occurs for the emergency brakes active on the shafts 26, 27 described above) is configured for locking the movement of the work tool itself, i.e., the respective blade. In particular, each auxiliary emergency brake 28 has an outer casing or support integral with the frame 3 and adapted to support the electromagnetic component and the locking element 23 and 24 and an interference element 40 integral with a shaft 30 of an auxiliary electric motor 15. Each auxiliary emergency brake 28 is structurally and functionally equivalent to the first and to the second auxiliary emergency brake 8b, 9b: no further description of each of the auxiliary emergency brakes 28 will therefore be reported below and figure 5 is also representative of the architecture of each of the auxiliary emergency brakes 28.

The vehicle can further comprise a controller 50 carried by the support frame 3 and communicatively connected with the first electric motor 8a, the second electric motor 9a, the auxiliary electric motor 15, the first and the second emergency brake 8b, 9b, the auxiliary emergency brake 28 and the battery pack 10; the controller 50 is configured for operating between a normal operating condition and an emergency operating condition. As will be further described below, the controller 50 is among other things configured for selectively disabling or allowing the power supply to each of the emergency brakes 8b, 9b and 28 and thus consequently determining the locking of the wheels and blades in the event of a situation deemed to be a potential safety hazard.

The vehicle also comprises a driving station 4 carried by the frame 3 and configured for receiving the user or operator intended to drive and steer the vehicle. The driving station 4 can comprise at least one seat 4a adapted to allow the user to sit.

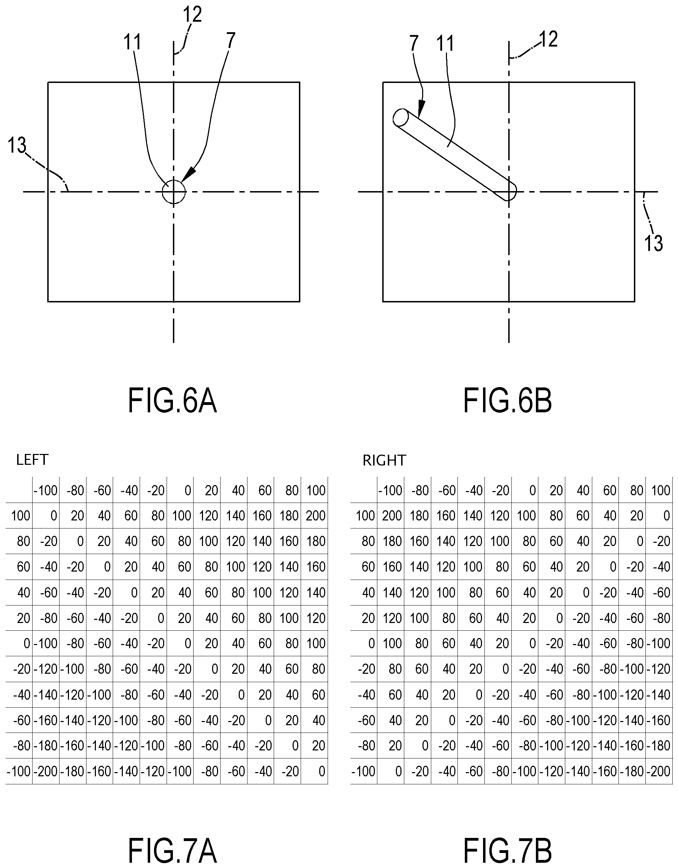

The vehicle 1 can further comprise a command device 7 carried by the support frame near the driving station 4 and configured for determining a movement of the vehicle when operated by the operator seated in the driving station. As shown in figures 6A and 6B, the control member 7 comprises a manual drive member 11 configured for being moved between a neutral position (figure 6A) and a plurality of operating positions (figure 6B) distinct from each other and from the neutral position. In particular, the manual drive member 11 is configured for moving from the neutral position according to at least one of:
- a movement along, or around, a first axis 12,
- a movement along, or around, a second axis 13 transverse to the first axis 12, and
- a combined movement either along, or around, the first axis 12 and along, or around, the second axis 13.

In particular, the manual drive member 11 can comprise and in particular can consist of at least one lever configured for assuming the neutral position in the absence of an action exerted by the operator on the lever itself: for example, elastic elements can be included which are active on the lever and adapted to keep it in a neutral position; the lever can be positionable by the operator away from said neutral position bi-directionally along or around the first axis 12 and/or bi-directionally along or around the second axis 13. In the illustrated example, the command device 7 is a 2 or 3-axis joystick operable by means of the lever 11.

As previously mentioned, the command device 7 is configured for determining a movement of the vehicle on the land to be maintained. In fact, figure 6B shows the manual drive member 11 following a combined movement along the first and the second axis 12, 13, to which the combined movement of the vehicle corresponds, for example according to a curved trajectory, forward and to the left. According to a further example, a movement of the manual drive member 11 forward with respect to the neutral position exclusively along the first axis 12 corresponds to a forward movement of the vehicle along the axis X, conversely a movement backward with respect to the neutral position exclusively along the first axis 12 corresponds to a movement backward of the vehicle 1 along the axis X. Similarly, a movement of the manual drive member exclusively along the second axis 13 to the right or left with respect to the neutral position is equivalent to a movement to the right or left of the vehicle substantially around its vertical axis. In practice, since the vehicle has two independent electric motors 9a and 9b, the two wheels or traction members 8 and 9 can be controlled independently by the controller 50 as a function of the position assumed by the manual drive member 11 with respect to its neutral position. The independent driving of the wheels allows the movement according to any direction and also the ability to manoeuvre the vehicle rotating on itself around a vertical axis positioned in the middle between the two wheels or driving members 8 and 9, as further described below.

In order to properly control the motion, as mentioned, the command device 7 is connected to the controller 50, which is configured for receiving at least one command signal from the command device 7, and subsequently, on the basis of the same command signal, generating a first control signal for driving the first electric motor 8a and second control signal for driving the second electric motor 9a. The command device 7 then determines the operation of the first and the second electric motor 8a, 9a, allowing the movement of the vehicle along any curvilinear or straight trajectory. For each operating position (position assumed by the manual drive member 11 when it is not arranged in the neutral position), the command device 7 is configured for emitting at least one respective command signal as a function of:
- a component of the movement of the manual drive member 11, relative to said neutral position, along or around the first axis 12 and
- a component of the movement of the drive member itself, relative to said neutral position, along or around the second axis 13.

The command signal can be a signal defined by at least a first command signal as a function of the movement component of the manual drive member 11, relative to said neutral position, along or around the first axis 12 and a second command signal as a function of the movement component of the drive member itself, relative to the neutral position, along or around the second axis 13.

The command signal can be defined as a digital signal defined by a first and a second command signal, each of which is a digital signal. Alternatively, the command signal can be represented as a digital signal defined by a vector, the components of which correspond to the first and the second command signal. The command signal could thus be a single digital signal which encloses the information of the first and the second command signal.

The command signal could alternatively be an analog signal, for example in voltage, defined by a first and a second command signal, both analog signals having a voltage value and respectively proportional to the movement of the manual drive member 11 along the first and the second axis 12, 13.

As previously mentioned, the controller 50, in the normal operating condition, is configured for generating a first and a second control signal, as a function of the command signal, for driving the first and the second electric motor 8a, 9a respectively.

In particular, the step of the controller 50 generating the first control signal, comprises a step of calculating, on the basis of the command signal received by the drive member 11, a value of a first parameter related to the angular speed set point (i.e., related to the desired angular speed value for the specific position assumed by the drive member 11) to apply to the first electric motor 8a. In particular, the value of the first parameter with which to drive the first electric motor is a function of a mapping factor which in practice represents in turn a value, variable as a function of the position of the drive member 11. In other words, the mapping factor represents a conversion factor between the position of the drive member 11 and the angular speed set point to apply to the first electric motor 8a. The value of the first parameter can be a function of the mapping factor and an angular speed reference value and can thus be expressed as a percentage or multiplicative factor of such a reference speed. From a practical point of view, the first mapping factor can be a multiplicative factor expressed as a percentage of said reference angular speed (e.g., -100%, -80%, -60%,-40%, -20%, 0%, +20%, +40%, +60%, +80%, +100%, etc., of the reference speed). In any case, the first mapping factor is a predetermined value for each of said operating positions assumed by the manual drive member (11). In other words, the controller 50, in order to suitably control the movement of the first electric motor 8a, following receipt of the first command signal from the drive member 11, calculates the value of the first parameter, which is given by said first mapping factor which is representative of the angular speed value to be imposed on the first electric motor 8a. In other words, it is the value of the first parameter which defines the reference angular speed value which the first electric motor 8a must reach. As also shown in figure 7A, the first mapping factor can assume a plurality of values on the basis of the position assumed by the drive member 11 with respect to the first and the second axis 12, 13. Each value of the first mapping factor thus corresponds to an angular speed value which is used for the determination of the value of the first parameter: the first parameter is sent to the first electric motor by means of the first control signal to impose the angular speed linked to the position assumed by the control member and thus to the first mapping factor.

The step of the controller 50 generating the second control signal for the second electric motor comprises a step of calculating, on the basis of the command signal received by the drive member 11, a value of a second parameter as a function of a second mapping value in a manner entirely similar to that described above for the first parameter.

The second parameter is therefore related to the angular speed set point (i.e., related to the desired angular speed value for the specific position assumed by the drive member 11) to apply to the second electric motor 9a. In particular, the value of the second parameter with which to drive the second electric motor is a function of a mapping factor (which for the same position of the control member 11 can in general be different from the value of the first parameter) which in practice represents in turn a value, which varies as a function of the position of the member 11. In other words, the mapping factor represents a conversion factor between the position of the drive member 11 and the angular speed set point to apply to the second first electric motor 9a. The value of the second parameter can be a function of the mapping factor and an angular speed reference value and can thus be expressed as a percentage or multiplicative factor of such a reference speed. From a practical point of view, the second mapping factor can be a multiplicative factor expressed as a percentage of said reference angular speed (e.g., -100%, -80%, -60%, -40%, -20%, 0%, +20%, +40%, +60%, +80%, +100%, etc., of the reference speed). In any case, the second mapping factor is a predetermined value for each of said operating positions assumed by the manual drive member (11).

In other words, each position of the command member also corresponds to a value of the second mapping factor (figure 7B) and thus a set point value for the angular speed of the second motor. The step of generating the second control signal is therefore analogous to the step of generating the first control signal. However, as shown in figure 7B, it should be noted how the second mapping factor can assume a plurality of values as a function of the components of the movement of the manual drive member 11 with respect to the first and the second axis 12, 13.

Observing figures 7A and 7B, which respectively represent the values of the first and the second mapping factor for the various positions assumed by the driver member 11, is can be noted that the neutral position of the member 11 is represented in the tables by the central box indicating "0" since in the neutral position the speed to be imposed on each motor is, in fact, zero. By moving the drive member 11 forward, corresponding positions are reached to which the values 20, 40, 60, etc. correspond for both the first and the second mapping factor which then determine driving the first and the second motor at identical speeds with the result that the vehicle will advance according to a straight trajectory. If, for example, the member 11 is moved to the right, the first factor assumes values such as 20 or 40 or 60 (depending on the extent of the movement on the member 11), while the second factor assumes the values -20, -40 or -60, thus causing a rotation in one direction for the first motor and in the opposite direction for the second and thus causing a rotation of the vehicle on itself substantially without movement either forward or backward.

It should also be noted that the values of the first and the second parameter are calculated by the controller 50 at regular intervals, for example each time interval between 0.1ms and 99ms, or following the detection by the controller 50 of a variation in the command signal. Variation of the command signal is intended as, for example, the assumption by the manual movement member of a different operating position.

The vehicle can further comprise at least one memory 51 communicatively connected to or defined within the controller 50 and configured for storing the first and the second mapping factors. In particular, the memory 51 is configured for storing each of the values which can be assumed by the first and by the second mapping factor for each of the operating positions which can be assumed by the manual drive member 11.

The memory 51 can further store a plurality of mappings distinct from each other, each comprising respective first and second mapping factors for each of the operating positions assumed by the manual drive member 11. The controller 50 is thus configured for receiving a selection by a user of one of the mappings as a function of which to select the value of the first and the second factor.

However, according to an alternative form of the present invention, the storage by the memory 51 of a single mapping exclusively comprising the values of the first and the second mapping factor is not excluded. In the latter case, the selection value can represent a multiplicative factor of each mapping factor value. The value of the first and the second parameter, calculated by the controller 50 for commanding the first and the second motor 8a,9a, will therefore be proportional to the multiplication factor (selection factor) and to the value of the first or the second mapping factor determined on the basis of the operating position assumed by the manual drive member 11. The multiplication factor essentially defines a gain adapted to increase or decrease the values of the first and the second mapping factor. In other words, the multiplication factor can assume a value k1 = 1, k2 = 2 or k3 = 3: depending on the value assumed by the multiplication factor (k1, k2 or k3) and following the same movement of the command member 7, a different value of the first and the second parameter corresponds, consequently determining a faster or slower movement of the vehicle. For example, the selection of the parameter k1 and following a movement of the command member 7 in a predetermined position, corresponds to an angular rotation speed of the first and the second motor 8a, 9a equal to x rpm, while following a selection of the parameter k2 and following the movement of the command member 7 in the same predetermined position, corresponds to an angular rotation speed of the first and the second motor 8a, 9a equal to y rpm greater than x rpm.

The controller 50 is further communicatively connected with each auxiliary motor 15 and configured for emitting, for each auxiliary electric motor 15, a respective drive signal for rotating a rotary blade 14. In particular, the controller 50 is configured for setting, through said drive signal, a rotation speed of each auxiliary electric motor 15, consequently determining the rotation speed of the blades 14. The movement speed of each auxiliary electric motor 15 can be determined by an angular speed setting signal received in input from said controller 50. In fact, the vehicle can comprise an input unit 16 communicatively connected with the controller 50 and configured for allowing the user to enter an angular speed value to be set for each auxiliary electric motor 15. Alternatively, the input unit 16 can allow the selection of a speed value of the auxiliary electric motor 15 preset and stored in the memory 51. In the latter embodiment, the controller 50 is configured for receiving a selection signal as a function of which to command each auxiliary electric motor 15.

The controller 50 can further or alternatively independently set the rotation speed of the blades 14 as a function of a detection signal from a grass sensor 17 carried by the frame 3 at the front portion and configured for detecting a height and/or density parameter of the grass to be cut. The grass sensor 17 can comprise an optical sensor and/or an acoustic sensor and/or a tactile sensor for defining the grass height and/or density parameter and communicating the latter to the controller 50 to which it is communicatively connected.

In accordance with a further alternative, the controller 50 can be configured for setting the speed of the blades as a function of a detection signal of the electrical current absorption by said auxiliary motor, or as a function of a detection signal of an active resistant torque on the crankshaft of said auxiliary motor. Such signals can be provided by suitable sensors communicatively connected with the controller 50.

On the basis of what has been described above, the controller 50 is configured for receiving command signals from the manual movement member 11 and for generating respective control signals (first and second) for commanding the movement of the first and the second electric motor 8a, 9a as well as the auxiliary electric motor(s) 15.

However, it is not excluded that the controller 50 comprises:
- a main controller 50a communicatively connected to the command device 7,
- a first peripheral controller 52 communicatively connected with the main controller and with the first electric motor 8a, and
- a second peripheral controller 53 communicatively connected with the main controller and with the second electric motor 9a.

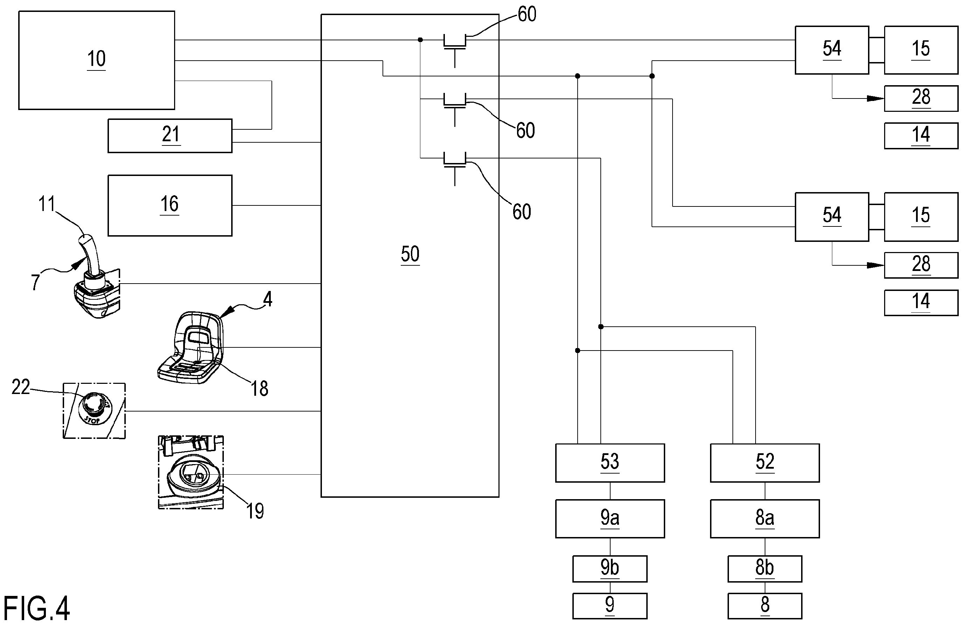

According to the latter embodiment of the controller 50, for example shown in figure 4, the main controller 50a is configured for receiving the command signal from the command device 7 and subsequently sending the first and the second control signal to the first and the second peripheral controller 52, 53, respectively.

The first peripheral controller 52 is then configured for receiving the first control signal and consequently driving the first electric motor 8a, while the second peripheral controller 53 is configured for receiving the second control signal and consequently driving the second electric motor 9a. The first and the second peripheral controller 52, 53 thus perform a cascade control of the voltage and current values of the first and the second electric motor 8a, 9a, respectively, as a function of the respective reference angular speed values to be maintained.

The controller 50 can further comprise an auxiliary peripheral controller 54 communicatively connected with the main controller 50a and with the auxiliary electric motor 15. The main controller can be configured for sending a respective drive signal to each auxiliary peripheral controller 54, while the latter can be configured for driving the respective auxiliary electric motor 15 on the basis of the drive signal. In other words, the auxiliary peripheral controller 54 performs a cascade control of the voltage and current values respectively of a respective auxiliary electric motor 54, as a function of the respective reference angular speed values to be maintained.

As previously mentioned, the controller 50 is further configured for operating in an emergency operation condition following the reception of one or more safety signals or the detection of a variation in said one or more safety signals generated by respective safety sensors.

In fact, the vehicle can comprise at least one presence sensor 18 configured for detecting whether the operator is in the driving station 4 above the seat 4a. The presence sensor 18 can for example be a weight sensor configured for generating or varying a respective safety signal if the weight value detected by the sensor is less than a predetermined threshold. In particular, the presence sensor is connected to the controller 50 and configured for sending the safety signal (or varying the safety signal) to the latter after the detection of a weight value lower than the predetermined threshold.

The vehicle can further comprise at least one charging sensor 19 of the battery pack 10 connected to the controller 50 and configured for detecting whether or not a power cable is connected to the charging port 20 of the battery pack 10. The charging sensor is further configured for generating or varying a respective safety signal if the connection of the power cable to the charging port 20 is not detected.

The vehicle can further comprise at least one ignition key sensor 21 carried by the frame at the driving station 4 and connected to the controller 50. The ignition key sensor 21 is further configured for detecting at least the presence of a vehicle ignition key in a seat for said key. The ignition key sensor 21 is configured for generating or varying a respective safety signal if the presence of the key in the seat is not detected. The vehicle further comprises at least one emergency sensor 22 carried by the frame 3 at the driving station 4 and connected to the controller 50. The emergency sensor 22 is further configured for detecting whether an emergency command has been activated. In such a case, the emergency sensor 22 is configured for generating or varying a respective safety signal if the activation of the emergency command is detected. As shown for example in figure 1, the emergency sensor 22 can be a mushroom button operable by the user.

Each of the aforementioned sensors is configured for sending a respective safety signal to the controller 50; upon receipt of at least one safety signal, the controller 50 is configured for switching from the normal operating condition to the emergency condition.

In particular, during the emergency condition, the controller 50 is configured for performing a stop procedure and a forced stop procedure independent of each other and performable in succession. In detail, the controller 50 is configured for performing the stop procedure as soon as it receives a safety signal from at least one of the aforementioned sensors: the stop procedure consists in generating stop signals respectively adapted to determine the stoppage of the first and the second electric motor 8a, 9a. In the embodiment of the invention in which the controller 50 directly controls the first and the second motor 8a, 9a, the stop signals are imposed on the motors directly by the controller 50. In the embodiment of the invention in which the controller 50 has a main controller 50a and a first and a second peripheral controller 52, 53 respectively assigned to control the first and the second electric motor 8a, 9a, the stop signals are sent by the main controller 50a to the first and the second peripheral controller 52, 53, respectively, which determine the stoppage of the first and the second motor 8a, 9a. According to an embodiment of the invention shown in figure 4, the stop signals are analog signals adapted to command mechanical or electronic switches 60 (respectively relays or transistors) to interrupt the power supply of the first and the second electric motor 8a, 9a. Alternatively, in accordance with a further embodiment of the present invention, the controller 50, or possibly the first and the second peripheral controller 52, 53, upon receipt of the stop signals, determines the stoppage of the first and the second electric motor by imposing a reference angular speed value equal to 0. In fact, if for example the controller 50 imposes a zero voltage value on the electric motors, these, due to their inertia, could continue to develop a non-zero angular speed, thus preventing making the vehicle effectively safe. In fact, consider a condition in which a safety signal is recorded with the vehicle at a section of sloping land. The inertia of the electric motors could be sufficient for determining an undesired movement of the vehicles on the section of sloping land, thus preventing making the vehicle itself safe. Conversely, the imposition by the controller 50 or the first and second peripheral controller 52, 53, of a zero reference speed value, allows the vehicle to be kept stopped in place. It should therefore be noted that in the latter case, the controller 50, in order to track a zero speed reference value, can vary the rotation direction of the motors from clockwise to counter-clockwise and vice versa. The emergency procedure also comprises a further step of measuring an instantaneous rotation speed value of each electric motor 8a, 9a, so as to be able to adequately control the angular speed of the motors themselves.

In the emergency condition, the controller 50 is thus configured for performing the stop procedure, as well as for verifying, by monitoring the instantaneous rotation speed value of each motor, whether after a predetermined time interval and following the execution of the stop procedure, the electric motors have actually stopped and/or the motion of said first and said second traction member has actually stopped. If the instantaneous rotation speed value of at least one of the first and the second electric motor 8a, 9a is different from zero after the predetermined time interval, the controller 50 is configured for performing an emergency stop procedure to allow the vehicle to stop. In particular, the emergency procedure comprises the steps of determining the intervention of each of the first and the second emergency brake 8b, 9b respectively controlling the locking of the right traction member 8 and the left traction member 9.

In the emergency condition and to determine the intervention of the first and the second emergency brake 8b, 9b, the controller 50 is configured for interrupting the power supply to each emergency brake. Thereby, the battery pack does not power the electromagnetic component 23, thus preventing the generation of the electromagnetic field by the electromagnetic component 23. As previously described, the primary thrust generated by the electromagnetic field is therefore zero and the secondary thrust of the elastic component 25 prevails, which moves the locking element 24 from the first to the second position. In the second position, the locking element 24 of the first and the second emergency brake 8b, 9b engage the respective interference element 40, mechanically locking the shaft 26 and the shaft 27 of the first and the second electric motor 8a, 9a, respectively.

It should be further noted that for the purpose of making the vehicle safe, it may not be sufficient to lock the movement of each traction member upon detection of a safety signal. In fact, the stop procedure can also have a step of generating a stop signal to determine the stoppage of each auxiliary electric motor 15, consequently preventing the movement of the blades 14. As previously detailed, the stoppage of each auxiliary electric motor 15 can occur following the interruption of the power supply to the auxiliary electric motors by means of one of the switches 60, or by imposing a zero reference speed value to the auxiliary electric motors 15. Subsequently, the controller 50, or each auxiliary peripheral controller 54, verifies whether each auxiliary electric motor has actually stopped and/or the motion of each blade has stopped. The verification step therefore allows an instantaneous rotation speed of each blade 14 to be monitored: if the instantaneous speed value of at least one blade 14 is non-zero, the controller 50 is configured for performing the emergency stop procedure.

The emergency stop procedure can further comprise a step of determining the intervention of each auxiliary emergency brake 28 and commanding the locking of each blade 14. This last step of determining the intervention of each auxiliary emergency brake is equivalent to the step of determining the intervention of the first and the second emergency brake 8b, 9b, allowing the interruption of the power supply to each auxiliary emergency brake and consequently the mechanical locking of each auxiliary electric motor 15.

The controller 50 remains in the emergency condition until it detects the presence of at least one safety signal. When the controller 50 no longer detects any safety signals, it can be configured for switching from the emergency operating condition to the normal operating condition, thereby restoring the full operation of the vehicle.

## Claims

1. Land maintenance vehicle, in particular for cutting lawns or gardens, comprising:
- a support frame (3),
- a driving station (4) for an operator carried by the support frame (3),
- at least one work tool (5) carried below by said support frame (3) and configured for performing a process on lands to be maintained,
- at least one command device (7), operable by the operator in said driving station (4), to determine a movement of the vehicle,
- at least one right traction member (8) and one left traction member (9) carried by the support frame (3) and intended for the transmission of traction to the ground,
- at least a first and a second electric motor (8a, 9a), independent of each other, the first electric motor (8a) being coupled to the right traction member (8) and the second electric motor (9a) being coupled to the left traction member (9),
- at least one battery pack (10) for the electric power supply of said first and second electric motor (9a),
- at least one controller (50) communicatively connected with said at least one command device (7), with the first electric motor (8a), with the second electric motor (9a) and, optionally, with the battery pack (10), said controller (50) being configured for:
∘ receiving at least one command signal from the command device (7),
∘ on the basis of such an at least one command signal, generating a first control signal for driving the first electric motor (8a) and a second control signal for driving the second electric motor (9a).

2. Vehicle according to claim 1, wherein the command device (7) comprises a manual drive member (11) configured for being movable from a neutral position to a plurality of distinct operating positions and from the neutral position, and wherein for each of said operating positions assumed by the manual drive member (11), the command device (7) is configured for emitting at least one respective command signal.

3. Vehicle according to claim 2, wherein the manual drive member (11) is configured for moving from said neutral position at least with:
- a movement along, or around, a first axis (12),
- a movement along, or around, a second transverse axis (13), optionally perpendicular, to the first axis (12), and
- a combined movement either along, or around, the first axis (12) or along, or around, the second axis (13),
said command device (7) being configured for generating said at least one command signal which is a function of:
- a component of said movement of the manual drive member (11), relative to said neutral position, along or around the first axis (12) and
- a component of said movement of the drive member itself, relative to said neutral position, along or around the second axis (13).

4. Vehicle according to claim 2 or 3, wherein the manual drive member (11) comprises at least one lever configured for:
- assuming said neutral position in the absence of an action on said lever by the operator,
- being movable, upon operator action, away from said neutral position
∘ bi-directionally along or around the first axis (12) and/or
∘ bi-directionally along or around the second axis (13);
in particular wherein said command device (7) is a 2 or 3-axis joystick of which said lever is part.

5. Vehicle according to claim 3 or 4, wherein the command device (7) is configured for generating:
- a first command signal which is a function of the component of said movement of the manual drive member (11), relative to said neutral position, along or around the first axis (12) and
- a second command signal which is a function of the component of said movement of the drive member itself, relative to said neutral position, along or around the second axis (13).

6. Vehicle according to any one of the preceding claims, wherein said step of generating the first control signal by the controller (50) comprises:
- calculating, on the basis of said at least one command signal, a value of a first parameter related to the angular speed set point to apply to the first electric motor (8a), and
- calculating, on the basis of said at least one command signal, a value of a second parameter related to the speed set point to apply to the second electric motor (9a),
wherein the controller (50) is configured for:
- calculating the value of the first parameter as a function of a first mapping factor and, optionally, of an angular speed reference value;
- said first mapping factor, optionally consisting of a multiplicative factor expressed as a percentage of said reference angular speed, is a predetermined value for each of said operating positions assumed by the manual drive member (11),
in particular, the controller (50) being configured for selecting the value of the first mapping factor as a function of:
∘ said component of said movement of the manual drive member (11), relative to said neutral position, along or around the first axis (12) and
∘ said component of said movement of the drive member itself, relative to said neutral position, along or around the second axis (13);
and/or wherein the controller (50) is configured for:
- calculating the value of the second parameter as a function of a second mapping factor and, optionally, an angular speed reference value;
- said second mapping factor, optionally consisting of a multiplicative factor expressed as a percentage of said reference angular speed, is a predetermined value for each of said operating positions assumed by the manual drive member (11),
in particular, wherein the controller (50) is configured for selecting the value of the second mapping factor as a function of:
∘ said component of said movement of the manual drive member (11), relative to said neutral position, along or around the first axis (12) and
∘ said component of said movement of the drive member itself, relative to said neutral position, along or around the second axis (13),
wherein the controller (50) is communicatively connected to, or comprises, a memory (51) in which at least one mapping is stored comprising:
- the values of said first mapping factor for each of said operating positions assumed by the manual drive member (11), and
- the values of said second mapping factor for each of said operating positions assumed by the manual drive member (11);
and wherein the controller (50) is configured for selecting the value of the first and second factor as a function of the operating positions assumed by the manual drive member (11),
in particular wherein the controller (50) is configured for selecting the value of the first and second factor as a function of:
- said component of said movement of the manual drive member (11), relative to said neutral position, along or around the first axis (12) and
- said component of said movement of the drive member itself, relative to said neutral position, along or around the second axis (13).

7. Vehicle according to the preceding claim, wherein a plurality of distinct mappings are stored in said memory (51), each mapping comprising:
- respective values of said first mapping factor for each of said operating positions assumed by the manual drive member (11), and
- respective values of said second mapping factor for each of said operating positions assumed by the manual drive member (11);
and wherein the controller (50) is configured for receiving a selection of one of the mappings by the operator and for selecting the value of the first and second factor also as a function of said selection of one of the mappings,
or wherein the controller (50) is configured for calculating the value of the first and the second parameter as a function of the selection value, the first or second mapping factor and, optionally, the reference angular speed value, wherein said selection value represents a multiplicative parameter of the first and the second mapping,
wherein the first control signal generated by the controller (50) comprises the value of said first parameter and the second control signal comprises the value of said second parameter.

8. Vehicle according to any one of the preceding claims, wherein said controller (50) comprises:
- a main controller (50a) communicatively connected to the command device (7),
- a first peripheral controller (52) communicatively connected with the main controller and with the first electric motor (8a), and
- a second peripheral controller (53) communicatively connected with the main controller and with the second electric motor (9a);
said main controller being configured for:
- receiving said at least one command signal from the command device (7),
- sending the first control signal to the first peripheral controller (52), the latter being configured for driving the first electric motor (8a) on the basis of said first control signal, and
- sending the second control signal to the second peripheral controller (53), the latter being configured for driving the second electric motor (9a) on the basis of said second control signal.

9. Vehicle according to any one of the preceding claims, wherein the value of said first parameter and the value of said second parameter are recalculated by the controller (50) at regular intervals or upon detection by the controller (50) of a variation in the command signal.

10. Vehicle according to any one of the preceding claims, wherein said work tool (5) comprises at least one rotary blade (14), wherein the vehicle includes at least one auxiliary electric motor (15), independent from said first and second electric motor (9a), connected to the rotary blade (14) and configured for rotating the latter, and wherein the controller (50) is communicatively connected with the auxiliary electric motor (15) and configured for emitting a drive signal of the auxiliary electric motor (15) and the rotational movement of the rotary blade (14),
wherein said work tool (5) comprises a plurality, optionally two, rotary blades, wherein the vehicle includes at least one respective auxiliary electric motor (15), independent from said first and second electric motor (8a, 9a), connected to each said respective rotary blade (14) and configured for rotating the latter, and wherein the controller (50) is communicatively connected with each auxiliary electric motor (15) and configured for emitting, for each auxiliary electric motor (15), a respective drive and rotational movement signal of the respective rotary blade (14), wherein the controller (50) is configured for setting, through said drive signal, a rotation speed of each auxiliary electric motor (15), and wherein the controller (50) is configured for determining said rotation speed of each auxiliary electric motor (15) on the basis of at least one of the following:
- an angular speed setting signal received in input from said controller (50), which can optionally be entered by the operator through an input unit (16) communicatively connected with the controller (50),
- a selection signal of one of a plurality of possible preset angular speed values present in one/said memory (51) communicatively connected to the controller (50), which can optionally be entered by the operator through one/said input unit (16) communicatively connected with the controller (50),
- an electrical current absorption detection by said auxiliary motor,
- a resistant torque detection active on the crankshaft of said auxiliary motor,
- a detection signal from a grass sensor (17) configured for detecting a height and/or density parameter of the grass to be cut communicatively connected with said controller (50), said grass sensor comprising an optical sensor and/or an acoustic sensor and/or a tactile sensor,
optionally wherein said controller (50) comprises, for each auxiliary electric motor (15):
- an auxiliary peripheral controller (54) communicatively connected with the main controller (50a) and the auxiliary electric motor (15),
said main controller (50a) being configured for:
- sending a respective drive signal to each auxiliary peripheral controller (54), the latter being configured for driving the respective auxiliary electric motor (15) on the basis of the drive signal.

11. Vehicle according to any one of the preceding claims, wherein the controller (50) is configured for
- receiving one or more safety signals, and
- moving from a normal operating condition to an emergency condition upon receipt of said one or more safety signals or upon detection of a variation in said one or more safety signals,
wherein the vehicle comprises one or more of the following safety sensors:
- at least one presence sensor (18) configured for detecting whether the operator is in said driving station (4) and generating or varying a respective safety signal if the presence of the operator is not detected, optionally wherein said presence sensor (18) comprises a weight sensor associated with the driving station (4) configured for generating or varying the respective safety signal if the detected weight is less than a predetermined threshold,
- at least one charge sensor (19) of the battery pack (10) configured for detecting whether or not a power cable is connected with a charging port (20) of said battery pack (10) carried by the vehicle and generating or varying a respective safety signal if the connection of the power cable to the charging port (20) is not detected,
- at least one ignition key sensor (21) configured for detecting at least the presence of a vehicle ignition key in a seat for said key carried by the vehicle itself and for generating or varying a respective safety signal if the presence of the key in said seat is not detected,
- at least one emergency sensor (22) configured for detecting whether an emergency command has been activated and generating or varying a respective safety signal if the activation of the emergency command is detected, optionally wherein the emergency sensor (22) comprises an activation sensor of an emergency selector or switch carried by said vehicle;
each of said safety sensors being communicatively connected with the controller (50) and arranged to transmit the respective safety signal to the latter,
wherein the controller (50), when in said emergency condition, is configured for performing a stop procedure comprising the following steps:
- generating a stop signal for determining the stoppage of the first electric motor (8a),
- generating a stop signal for determining the stoppage of the second electric motor (9a),
wherein the vehicle comprises a first emergency brake (8b) operatively interposed between the first electric motor (8a) and the right traction member (8), and a second emergency brake (9b) operatively interposed between the second electric motor (9a) and the left traction member (9);
and wherein the controller (50), when in said emergency condition, is configured for performing an emergency stop procedure comprising:
- determining the intervention of said first emergency brake (8b) for controlling the locking of the right traction member (8) and
- determining the intervention of said second emergency brake (9b) for controlling the locking of the left traction member (9),
wherein the controller (50), when in said emergency condition, is configured for sequentially performing the following actions:
- performing the stop procedure,
- verifying whether, within a predetermined time interval following the stop procedure, the first and the second electric motor (9a) have actually stopped and/or the movement of said first and said second traction member has actually stopped,
- if the verification procedure has a negative outcome, performing the emergency stop procedure,
and wherein:
- said first emergency brake (8b) comprises at least one respective locking element (24) selectively movable between a first position in which it allows the movement of the right traction member (8) and a second position in which it locks the movement of the right traction member (8),
- said second emergency brake (9b) comprises at least one respective locking element (24) selectively movable between a first position in which it allows the movement of the left traction member (9) and a second position in which it locks the movement of the left traction member (9),
wherein each of said first and second emergency brake (8b, 9b) comprises:
- at least one respective electromagnetic component (23) powered by a respective electrical line connected with said battery pack (10) and configured, only when electrically powered, for generating an electromagnetic field,
wherein the respective locking element (24) is configured for cooperating with the electromagnetic component (23) and coupling with said electromagnetic field which can be generated by the electromagnetic component, so as to undergo a primary thrust in the presence of the electromagnetic field itself, and
wherein when the controller (50) is in said normal operating condition, the battery pack (10) is configured for electrically powering the electromagnetic component (23) through said electrical line and, thus, determining the generation of said electromagnetic field and said primary thrust on the respective locking element (24) configured for maintaining the locking element (24) itself in said first position,
and wherein when the controller (50) is in the emergency condition, in particular during the execution of said emergency stop procedure, the controller (50) is configured for opening said electrical line and disabling the electric power supply from the battery pack (10) to the electromagnetic component, said respective locking element (24) in the absence of said primary thrust being configured for moving to said second position,
wherein each of said first and second emergency brake (8b, 9b) comprises:
- a respective elastic component (25) active on the locking element (24) of the corresponding of said first and second brake and configured for exerting a secondary thrust on said locking element (24) towards the second position,
wherein in the presence of power supply in said power supply line the primary thrust exerted by the electromagnetic field on the locking element (24) towards said first position is configured for prevailing over the secondary thrust, consequently maintaining the locking element (24) itself in said first position, while in the absence of electric power supply from the battery pack (10) to the electromagnetic component (23), the locking element (24) is configured for moving in said second position on the action of the secondary thrust.

12. Vehicle according to any one of the preceding claims, wherein the right traction member (8) comprises a right drive wheel keyed on a respective shaft (26) connected to the first electric motor (8a) and wherein the left traction member (9) comprises a left drive wheel keyed on a respective shaft (27) connected to the second electric motor (9a); optionally wherein the vehicle comprises one or more non-motorized auxiliary wheels (35) mounted to the frame, in particular hinged to the frame according to a free vertical rotation axis.

13. Vehicle according to claim 11, or 11 and 12, wherein the first emergency brake (8b) is active on said shaft (26) between the first electric motor (8a) and the right drive wheel, and wherein the second emergency brake (9b) is active on the shaft (27) between the second electric motor (9a) and the left traction member (9).

14. Vehicle according to any one of the preceding claims 11 to 13, in combination with claim 10, wherein the controller (50), when in said emergency condition, is configured for performing one/said stop procedure comprising the following step/the further step of:
- generating a stop signal for determining the stoppage of each auxiliary electric motor (15).

15. Vehicle according to any one of the preceding claims in combination with claim 10, comprising an auxiliary emergency brake (28) operatively interposed between each auxiliary electric motor (15) and the respective blade; and wherein the controller (50), when in said emergency condition, is configured for performing one/said emergency stop procedure comprising the following step/the further step of:
- determining the intervention of each said auxiliary emergency brake (28) to command the locking of each respective blade,
wherein the controller (50), when in said emergency condition, is configured for sequentially performing the following actions:
- performing the stop procedure,
- verifying whether, within a predetermined time interval following the stop procedure, each auxiliary electric motor (15) has actually stopped and/or the movement of each blade has actually stopped,
- if the verification procedure has a negative outcome, performing the emergency stop procedure,
wherein each auxiliary emergency brake (28) comprises at least one respective locking element (24) selectively movable between a first position in which it allows the transmission of motion from the respective auxiliary electric motor (15) to the corresponding blade (14) and a second position in which it locks the transmission of motion from the respective auxiliary electric motor (15) to the corresponding blade(14),
wherein each auxiliary brake comprises:
- at least one respective electromagnetic component (23) powered by a respective electrical line (29) connected with said battery pack (10) and configured, only when electrically powered, for generating an electromagnetic field,
wherein the respective locking element is configured for cooperating with the electromagnetic component (23) and coupling with said electromagnetic field which can be generated by the electromagnetic component, so as to undergo a primary thrust in the presence of the electromagnetic field itself, and
wherein when the controller (50) is in said normal operating condition, the battery pack (10) is configured for electrically powering the electromagnetic component (23) through said electrical line and, thus, determining the generation of said electromagnetic field and said primary thrust on the respective locking element (24) configured for maintaining the locking element (24) itself in said first position,
and wherein when the controller (50) is in the emergency condition, in particular during the execution of said emergency stop procedure, the controller (50) is configured for opening said electrical line and disabling the electric power supply from the battery pack (10) to the electromagnetic component, said respective locking element (24) in the absence of said primary thrust being configured for moving to said second position,
wherein each auxiliary emergency brake (28) comprises:
- a respective elastic component (25) active on the locking element (24) of the auxiliary brake itself and configured for exerting a secondary thrust on said locking element (24) towards the second position,
wherein in the presence of power supply in said power supply line the primary thrust exerted by the electromagnetic field on the locking element (24) towards said first position is configured for prevailing over the secondary thrust, consequently maintaining the locking element (24) itself in said first position, while in the absence of electric power supply from the battery pack (10) to the electromagnetic component (23), the locking element (24) is configured for moving in said second position on the action of the secondary thrust,
in particular wherein each blade (14) is keyed on a respective shaft (30) connected to the respective auxiliary electric motor (15), and
wherein the corresponding emergency auxiliary brake (28) is active on said respective shaft (30).
